# EUROPÄISCHE PATENTSCHRIFT

(11) **EP 4 285 177 B1**
(45) Veröffentlichungstag und Bekanntmachung des Hinweises auf die Patenterteilung: **12.11.2025**
(21) Anmeldenummer: 21835194.8
(22) Anmeldetag: 03.12.2021
(51) Int. Cl.: G02B 27/01

(54) **MITTELS KOPFBEDECKUNG TRAGBARER COMPUTER MIT BILDSCHIRM UND VERWENDUNG**
COMPUTER WEARABLE BY MEANS OF HEADGEAR AND WITH A SCREEN, AND USE
ORDINATEUR À ÉCRAN, POUVANT ÊTRE PORTÉ AU MOYEN D'UN COUVRE-CHEF ET UTILISATION

(30) Priorität: 21.12.2020 DE 102020216376
(43) Veröffentlichungstag der Anmeldung: 06.12.2023
(73) Patentinhaber: TeamViewer Germany GmbH, 73033 Göppingen (DE)
(72) Erfinder: SCHRAVEN, Ralph, 47798 Krefeld (DE); HOLM, Marco, 52134 Herzogenrath (DE)
(74) Vertreter: Ostertag & Partner Patentanwälte mbB
(86) Internationale Anmeldenummer: PCT/EP2021/084114
(87) Internationale Veröffentlichungsnummer: WO 2022/135877

(56) Entgegenhaltungen:
- WO-A1-2017/120353
- DE-A1- 102017 203 969
- DE-T2- 60 118 846

## Beschreibung

Die Erfindung betrifft ein System mit einem am Kopf tragbaren Computer und einem Bildschirm, der sich im Blickfeld eines Benutzers befinden kann, wenn der Computer am Kopf getragen wird. Die Erfindung betrifft außerdem eine Befestigungseinrichtung und eine Verwendung.

Ein tragbarer Computer mit Bildschirm ist unter dem Markennamen "Google Glass" bekannt. Der tragbare Computer "Google Glass" umfasst einen Bügel, der einem Bügel einer Brille entspricht. In den Bügel sind der Computer, eine Kamera und ein Mikrodisplay integriert. Durch das Mikrodisplay erzeugte Bilder werden über ein transparentes aus Acrylglas, Polycarbonat oder Glas bestehendes Prisma in das Blickfeld eines Benutzers projiziert. Der Bügel kann mit einem Gestell lösbar verbunden werden, welches zwei Brillengläser, eine Fassung für die Brillengläser und einen einzelnen Brillenbügel umfasst. Ist der Bügel des tragbaren Computers "Google Glass" mit dem Gestell lösbar verbunden worden, so kann die dann vorliegenden Konstruktion wie eine übliche Brille getragen und benutzt werden. Außerdem können während des Tragens vom Computer bereitgestellte optische Informationen über das transparente Prisma an den Benutzer übermittelt werden. Fotos oder Videos können von der Umwelt aufgenommen werden, die sich im Blickfeld des Benutzers befindet.

Nachteilhaft kann ein Brillenträger nicht seine eigene Brille benutzen, um den tragbaren Computer "Google Glass" einsetzen zu können.

Es sind verschiedene Lösungen bekannt, um einen am Kopf tragbaren Computer mit einem Bildschirm zusätzlich zur eigenen Brille tragen zu können. So bietet die Firma Vuzix Corp. einen solchen am Kopf tragbaren Computer an, der mithilfe eines klemmend getragenen Bügels und eines Riemens am Kopf getragen werden kann. Als Display dient ein LCD Display, welches im Sichtfeld des Benutzers platziert wird. Das Blickfeld des Benutzers wird bei solchen Lösungen mit nicht durchsichtigem Display beeinträchtigt. Auch ist die Anbringung am Kopf instabil. Körper- und Kopfbewegungen sind daher nur eingeschränkt möglich. Der Tragekomfort ist aufgrund der Klemmwirkung des Bügels gering. Solche Lösungen sind daher nicht praktikabel, wenn der tragbare Computer viele Stunden am Tag getragen werden muss und außerdem ständige Bewegungen erforderlich sind.

Auf dem Gebiet der Lagerlogistik werden solche am Kopf tragbare Computer eingesetzt, um einen Lagerarbeiter dabei zu unterstützen, gelagerte Waren aufzufinden und zu transportieren oder für einen Transport vorzubereiten. Es muss dann möglich sein, einen am Kopf tragbaren Computer viele Stunden bequem tragen zu können. Außerdem müssen ständige Körper- und Kopfbewegungen möglich sein. Das Sichtfeld eines Lagerarbeiters darf möglichst nicht beeinträchtigt werden. Das auf dem Gebiet der Lagerlogistik am Kopf tragbare Computer eingesetzt werden, ist beispielsweise aus der Druckschrift DE 10 2017 203 969 A1 bekannt.

Aus der Druckschrift DE 60 118 846 T2 ist eine am Kopf montierbare Anzeigeeinheit bekannt, bei der ein Auslegerarm über eine Justiereinheit an einem über den Kopf hinweg laufenden Tragebügel montiert ist. Der Auslegerarm ist dabei fest mit der Justiereinheit verbunden und ein Kugelgelenkmechanismus erlaubt das Positionieren der Anzeige bezüglich des Auges des Benutzers.

Aus der Druckschrift WO 2017/120353 A1 ist eine am Kopf montierbare Anzeigeeinheit bekannt, bei der ebenfalls über ein Kugelgelenk der Auslegerarm justierbar ist. Zudem kann der Auslegearm entlang einer klammerförmigen Schiene verschoben werden, um die Distanz zwischen einer Anzeige und dem Auge des Benutzers einzustellen.

Aus der Druckschrift DE 10 2017 203 969 A1 ist eine Datenbrille bekannt, die eine Bewegungserkennungseinrichtung für ein bewegungsabhängiges Aktivieren eines Prozessschrittes umfasst.

Es ist Aufgabe der Erfindung, vorbeschriebene Probleme zu lösen. Insbesondere sollen durch die Erfindung Beschädigungen des am Kopf tragbaren Computers oder Verletzungen des Benutzers zuverlässig vermieden werden. Es soll möglich sein, auf dem Gebiet der Lagerlogistik einen am Kopf tragbaren Computer der eingangs genannten Art in praktikabler Weise zusätzlich zu einer eigenen Brille einsetzen zu können.

Die Aufgabe der Erfindung wird durch ein System mit den Merkmalen des Anspruchs 1 sowie durch seine Verwendung gemäß Anspruch 13 gelöst. Abhängige Ansprüche betreffen vorteilhafte Ausgestaltungen.

Das System umfasst eine Kopfbedeckung, die seitlich steif ist. Die Kopfbedeckung umfasst also einen steifen Bereich. Seitlich steif bedeutet, dass die Kopfbedeckung beim Ohr steif ist, wenn die Kopfbedeckung getragen wird. Eine Kopfbedeckung ist steif, wenn der Bügel beim steifen Bereich befestigt und getragen werden kann, ohne dass sich die Form des steifen Bereichs durch übliche Kopf- und Körperbewegungen verändern kann.

Das System umfasst einen tragbaren Computer, der an einem Bügel angebracht ist. Der Bügel kann einem Bügel einer Brille entsprechen. An dem Bügel ist ein Mikrodisplay befestigt. Ein transparentes Prisma ist an dem Bügel angebracht und bei einem Ende des Bügels angeordnet. Durch das Mikrodisplay erzeugte Bilder können bei bestimmungsgemäßer Benutzung über das transparente Prisma in das Blickfeld eines Benutzers projiziert werden. Während des Tragens können vom Computer bereitgestellte optische Informationen über das transparente Prisma an den Benutzer übermittelt werden.

Der Bügel ist an dem steifen Bereich der Kopfbedeckung durch eine Befestigungseinrichtung beweglich befestigt oder kann an der Kopfbedeckung beweglich befestigt werden. Die Befestigungseinrichtung ist so, dass der Bügel innerhalb einer Ebene bewegt werden kann, die zumindest im Wesentlichen parallel zum steifen Bereich der Kopfbedeckung verläuft, wenn die Befestigungseinrichtung bestimmungsgemäß an dem steifen Bereich befestigt ist. Der Bügel kann innerhalb einer Ebene bewegt werden, wenn dieser relativ zur Kopfbedeckung zumindest entlang einer Linie bewegt werden kann, die innerhalb der Ebene liegt.

Vorzugsweise kann der Bügel jedoch innerhalb der Ebene in jeder Richtung relativ zur Kopfbedeckung bewegt werden, die möglich ist. Aus Sicht eines Benutzers gesehen, der die Kopfbedeckung trägt, kann dann der Bügel dann vor und zurück sowie herauf und herunter bewegt werden.

Der Bügel kann vor allem in Richtung Gesichtsfeld eines Benutzers und zurückbewegt werden und zwar im Wesentlichen parallel zum genannten steifen Bereich der Kopfbedeckung, der sich während des Tragens beim Ohr befindet. Dadurch kann beim üblichen Tragen der Bügel in horizontaler Richtung relativ zur Kopfbedeckung bewegt werden.

Außerdem kann grundsätzlich auch der Abstand des Bügels zur Kopfbedeckung verstellt werden und zwar wiederum durch eine Bewegung, die parallel oder zumindest im Wesentlichen parallel zum steifen Bereich verläuft. Dadurch kann beim üblichen Tragen der Bügel in senkrechter Richtung bewegt werden und zwar relativ zur Kopfbedeckung.

Mit Bewegung parallel zum steifen Bereich ist gemeint, dass die Bewegung parallel zur Hauptoberfläche des steifen Bereichs verläuft. Bewegung parallel zu Kanten des steifen Bereichs sind nicht gemeint.

Der Bügel kann grundsätzlich nicht ausschließlich senkrecht oder zumindest im Wesentlichen senkrecht bewegt zum steifen Bereich werden, also senkrecht zur Hauptoberfläche des steifen Bereichs.

Eine Kopfbedeckung im Sinne der vorliegenden Erfindung kann eng an der Oberseite eines menschlichen Kopfes anliegen, wie dies bei einer Kappe der Fall ist. Eine Kopfbedeckung im Sinne der vorliegenden Erfindung bedeckt zumindest überwiegend die Oberseite eines Kopfes und liegt dann zumindest überwiegend auf der Oberseite des Kopfes an. Die Kopfbedeckung kann eine Kappe oder eine Mütze sein, die dann vollständig die Oberseite eines Kopfes im Sinne der vorliegenden Erfindung bedecken. Da die Kopfbedeckung zumindest überwiegend die Oberseite eines Kopfes bedeckt und kontaktiert, gibt es einen guten Halt zum Kopf. Bewegungen des Körpers oder des Kopfes beeinträchtigen den Sitz der Kopfbedeckung daher in der Regel nicht. Durch die Kopfbedeckung wird also eine stabile Positionierung relativ zum Kopf erreicht.

Es ist durch die bewegliche Befestigung des Bügels relativ zur Kopfbedeckung möglich, das transparente Prisma geeignet im Gesichtsfeld eines Benutzers auch dann zu platzieren, wenn der Benutzer eine Brille trägt. Durch das transparente Prisma wird eine nachteilhafte Abschattung des Gesichtsfelds des Benutzers vermieden. Ein derartiges transparentes Prisma erfordert eine sehr genaue Platzierung. Dies ist durch das erfindungsgemäße System möglich.

Das transparente Prisma kann aus Glas oder Kunststoff bestehen.

Das System kann viele Stunden bequem getragen werden. Es sind Bewegungen möglich, wie diese auf dem Gebiet der Lagerlogistik von einem Lagerarbeiter üblicherweise ausgeführt werden, ohne dadurch die Funktion zu beeinträchtigen.

Der versteifte Bereich ist vorzugsweise durch eine aus Kunststoff bestehende Fläche gebildet. Kunststoff ist leicht und grundsätzlich hinreichend steif. Insbesondere wird Hartplastik als Kunststoff ausgewählt. Die Auswahl von Kunststoff trägt daher vorteilhaft zu einem geringen Gewicht bei.

Die Kopfbedeckung besteht vorzugsweise mit Ausnahme von ein oder mehreren versteiften Bereichen aus flexiblem Material. Die seitliche Versteifung ist vorzugsweise eine steife Einlage. Eine seitliche steife Einlage ist ein flächiges steifes Element, das sich bei einem Ohr befindet, wenn die Kopfbedeckung bestimmungsgemäß getragen wird.

Mit Ausnahme von ein oder mehreren steifen Bereichen ist die Kopfbedeckung also nicht steif und kann daher angenehm getragen werden.

Ein Material ist flexibel im Sinne der vorliegenden Erfindung, wenn dieses flexibler ist als die steife Einlage bzw. der steife Bereich.

Wird die Kopfbedeckung bestimmungsgemäß getragen, so wird die steife Einlage vorzugsweise durch flexibles Material vom angrenzenden Kopfbereich getrennt. Dadurch wird der Tragekomfort verbessert. Das System kann entsprechend problemloser für viele Stunden getragen werden. Die steife Einlage kann sich beispielsweise in einer Tasche befinden, die durch das flexible Material gebildet wird. Dann gibt es während des Tragens zwingend flexibles Material, das die steife Einlage vom Kopf trennt. Das flexible Material kann bereichsweise doppellagig sein und die steife Einlage befindet sich dann zwischen den zwei flexiblen Lagen.

Weil die Kopfbedeckung flexibles Material umfasst, kann die Kopfbedeckung angenehm und daher besonders lange getragen werden. Außerdem ist flexibles Material leicht, was ergänzend zu einem geringen Gewicht beiträgt und es damit erleichtert, das System für viele Stunden tragen zu können.

Als flexibles Material ist ein Textil eingesetzt. Das Textil kann zum Beispiel ein Gewirk, eine Maschenware, ein Geflecht, ein Vliesstoff oder ein Filz sein. Vorzugsweise handelt es sich um ein Gewebe. Das Gewebe kann elastische Kettfäden und/oder elastische Schussfäden umfassen. Zu bevorzugen ist jedoch, dass das Gewebe nicht elastische Kettfäden und nicht elastische Schussfäden umfasst, um den Halt zu stabilisieren. Ein Gewebe ist luftdurchlässig, was den Tragekomfort verbessert. Dadurch wird verbessert erreicht, dass das System für viele Stunden getragen werden kann.

Als flexibles Material kann alternativ oder ergänzend ein Netz aus textilen Fäden eingesetzt sein. Ein solches textiles Netz verfügt im Vergleich zu einem Gewebe über deutlich sichtbare Öffnungen und ist daher sehr viel luftdurchlässiger als ein Gewebe. Dadurch wird das Trageempfinden weiter verbessert. Die Öffnungen eines Netzes sind grundsätzlich regelmäßig angeordnet.

Ein nicht elastischer Faden im Sinne der vorliegenden Erfindung besteht beispielsweise aus Baumwolle. Ein Faden, der zumindest vergleichbar nicht elastisch ist wie Baumwolle, ist ebenfalls ein Faden, der nicht elastisch ist im Sinne der vorliegenden Erfindung.

Die Kopfbedeckung kann vereinzelt Lüftungsöffnungen umfassen, die nicht Öffnungen eines textilen Netzes sind. In diesem Fall bedeckt die Kopfbedeckung eine Kopfoberseite nicht vollständig im Sinne der vorliegenden Erfindung. Es können beispielsweise ein bis vier solcher Lüftungsöffnungen vorhanden sein.

Vorzugsweise gibt es zwei seitliche steife Bereiche, die sich gegenüberliegen und die sich also jeweils bei einem Ohr befinden, wenn die Kopfbedeckung bestimmungsgemäß getragen wird. Die beiden steifen Bereiche sind insbesondere gleich beschaffen oder zumindest im Wesentlichen gleich beschaffen. Der Halt kann durch einen solchen symmetrischen oder zumindest im Wesentlichen symmetrischen Aufbau verbessert werden. Dadurch wird außerdem ein gleichmäßiges Trageempfinden erzeugt, was den Tragekomfort verbessert.

Gibt es zwei steife Bereiche, die sich jeweils bei einem Ohr befinden, und kann der Bügel lösbar an einem solchen steifen Bereich befestigt werden, so kann der Bügel wahlweise auf der linken und der rechten Seite des Benutzers getragen werden. Ein Benutzer kann sich daher auswählen, mit welchem Auge er bevorzugt die Bilder betrachten möchte, die über das transparente Prisma bereitgestellt werden.

Der Bügel ist vorzugsweise lösbar an dem zumindest einen seitlichen steifen Bereich befestigt und so beschaffen, dass der Bügel mit einem weiteren Gestell so verbunden werden kann, dass die so entstandene Konstruktion wie eine Brille getragen werden kann. Das weitere Gestell umfasst also ebenfalls einen Bügel und ein Verbindungsmittel, welches die beiden Bügel miteinander wie bei einer Brille verbindet. Der Computer kann dann wie eine Brille getragen werden. Der Computer kann bei dieser Ausgestaltung wahlweise auch ohne eine Kopfbedeckung getragen werden, so zum Beispiel von einem Benutzer, der kein Brillenträger ist. Auf dem Gebiet der Lagerlogistik kann daher die Art des Tragens flexibel an den Bedarf eines jeweiligen Lagerarbeiters angepasst werden.

Die Befestigungseinrichtung kann eine Klammer umfassen. Die Klammer kann an dem Bügel befestigt sein. Die Klammer kann aus elastisch biegsamem Metall bestehen. Die Klammer kann den steifen Bereich der Kopfbedeckung umklammern, um den Bügel an der Kopfbedeckung zu befestigen. Auf diese Weise können der Bügel und damit der Computer lösbar mit der Kopfbedeckung verbunden sein.

Der steife Bereich kann zum Beispiel nach außen hin eine Verdickung aufweisen, die von der Klammer umklammert werden kann, um den Halt zu verbessern. Dann kann eine aus Kunststoff bestehende Klammer genügen, um den Bügel hinreichend zuverlässig mit der Kopfbedeckung lösbar zu verbinden.

Erfindungsgemäß ist an der Kopfbedeckung eine Klammer befestigt, die den Bügel umgreifen kann. Diese Klammer kann an der Kopfbedeckung lösbar befestigt sein. Da der Bügel von einer Klammer umgriffen werden kann, kann die Klammer dann vorteilhaft aus einem leichten Material wie Kunststoff bestehen.

Die an der Kopfbedeckung befestigte Klammer umgreift den Bügel während des Tragens derart, dass der Bügel vom Kopf bzw. der Kopfbedeckung aus gesehen nach unten in Richtung Körper gezogen werden kann, um den Bügel von der Klammer zu lösen. Insbesondere bei einem Lagerarbeiter besteht das Problem, dass der Bügel oder ein mit dem Bügel verbundenes Kabel unplanmäßig hängen bleiben können. Der Bügel kann sich dann leicht aus seiner Klammer lösen. Beschädigungen oder Verletzungen können so zuverlässig vermieden werden.

Die Befestigungseinrichtung kann beide zuvor beschriebenen Klammern umfassen. Die eine Klammer besteht dann beispielsweise aus Metall und umklammert den steifen Bereich der Kopfbedeckung, der sich während des Tragens beim Ohr befindet. Die weitere Klammer besteht dann beispielsweise aus Kunststoff. Die weitere Klammer umklammert den Bügel. Durch die beispielsweise aus Metall bestehende eine Klammer kann die beispielsweise aus Kunststoff bestehende weitere Klammer lösbar an der Kopfbedeckung befestigt werden.

Die Befestigungseinrichtung umfasst in einer Ausgestaltung eine verschiebbar und/oder schwenkbar gelagerte Schiene. Die Schiene kann parallel oder zumindest im Wesentlichen parallel zum seitlichen steifen Bereich verschoben und/oder verschwenkt werden, wenn der Bügel an dem seitlichen steifen Bereich befestigt ist. Die Schwenkachse verläuft dann also senkrecht zur Hauptoberfläche des seitlich versteiften Bereichs.

Die Schiene kann derart verschiebbar gelagert sein, dass dadurch der Abstand zwischen der Kopfbedeckung und dem Bügel verändert werden kann. Es ist so eine Höhenverstellbarkeit für den Bügel möglich.

Vorzugsweise umfasst die Befestigungseinrichtung Rastmittel, durch die die Stellung der verschiebbar gelagerten Schiene verrastet werden kann. Die Schiene kann also verschoben und an gewünschter Stelle verrastet werden. Ein unerwünschtes Verschieben der Schiene kann so geeignet vermieden werden. Beispielsweise der Abstand des Bügels zur Kopfbedeckung kann so geeignet fixiert werden. Der Abstand des Bügels zur Kopfbedeckung kann dann außerdem besonders einfach verändert werden.

Die Schiene kann ein Langloch aufweisen, durch welches die Schiene verschiebbar gelagert werden kann. Eine beispielsweise am steifen Bereich der Kopfbedeckung befestigte kreisrunde Scheibe kann im Langloch angeordnet sein, umso die Schiene verschiebbar und zugleich auch schwenkbar zu lagern.

Als Rastmittel kann die Schiene eine Vielzahl von Mulden aufweisen, die hintereinander entlang der Schiene angeordnet sein können. Als Rastmittel kann eine biegsam angeordnete Nase vorhanden sein, die in eine jede Mulde einrasten kann. Die biegsam angeordnete Nase kann an dem steifen Bereich der Kopfbedeckung befestigt sein. Die biegsam angeordnete Nase kann Teil der Befestigungseinrichtung sein. Auf diese Weise können geeignete Rastmittel mit geringem Bauraum bereitgestellt werden, um ein unplanmäßiges Verschieben der Schiene vermeiden zu können.

Die kreisrunde Scheibe kann an einer Abdeckung befestigt sein, die die Schiene teilweise von außen bedeckt. Die Abdeckung kann zur Befestigung der Schiene beitragen. Die Abdeckung kann sich innerhalb einer langlochartigen Umrandung der Schiene befinden und so ergänzend zur verschiebbaren Lagerung der Schiene beitragen.

Ein unerwünschtes Verschieben der Schiene kann beispielsweise durch ein Klemmmittel erreicht werden. Ein Rastmittel ist jedoch zu bevorzugen, da dieses besonders einfach und zuverlässig vor einem unerwünschten Verschieben zu schützen vermag.

Die Schiene kann derart verschwenkbar gelagert sein, dass dadurch der Bügel in Richtung Gesichtsfeld beim Tragen der Kopfbedeckung bewegt werden kann und zurück. Um dies zu erreichen, kann die Schiene um eine Achse verschwenkbar mit dem steifen Bereich der Kopfbedeckung verbunden sein oder verbunden werden. Die Schiene kann außerdem um eine Achse verschwenkbar mit dem Bügel verbunden sein oder verbunden werden. Damit der Bügel dann geeignet parallel zum steifen Bereich bewegt werden kann, verlaufen die Achsen vorzugsweise parallel.

Vorzugsweise kann eine Schwenkbewegung des Bügels durch Rastmittel und/oder Klemmmittel verrastet werden. Als Rastmittel können zwei übereinander angeordnete Scheiben eingesetzt sein, die gegenüberliegend kreisförmig oder teilkreisförmig angeordnete Zähne und/oder Mulden aufweisen. Zähne der einen Scheibe können dann in Mulden der anderen Scheibe eingreifen oder ein jeder Zahn der einen Scheibe kann dann zwischen zwei Zähne der anderen Scheibe eingreifen, um so ein unplanmäßiges Verschwenken zu vermeiden. Die Scheiben können dann aus einem hinreichend elastischen Kunststoff bestehen, um ein Einrasten bewirken zu können.

An einem Ende der Schiene kann eine beispielsweise aus Metall bestehende Klammer vorhanden sein, die den steifen Bereich der Kopfbedeckung umklammert bzw. umklammern kann. An der Schiene kann eine beispielsweise aus Kunststoff bestehende Klammer vorhanden sein, die den Bügel umklammert bzw. umklammern kann. Die Klammer, die den Bügel umklammert, kann relativ zur Schiene verschiebbar sein, um den Bügel verschieben zu können. Es kann aber die beispielsweise aus Metall bestehende Klammer verschiebbar mit der Schiene verbunden sein, um so einen Bügel relativ zur beispielsweise aus Metall bestehenden Klammer verschieben zu können und damit relativ zur Kopfbedeckung, wenn die beispielsweise aus Metall bestehende Klammer am steifen Bereich der Kopfbedeckung befestigt ist.

Die Befestigungseinrichtung kann einen austauschbaren Abstandshalter umfassen, durch den ein seitlicher Abstand zwischen der Kopfbedeckung und dem daran befestigten Bügel eingestellt werden kann. Indem durch Austausch ein dickerer oder dünnerer Abstandshalter eingesetzt werden kann, kann ein seitlicher Abstand zwischen der Kopfbedeckung und dem daran befestigten Bügel verändert werden.

Vorzugsweise kann der Abstandshalter unterschiedlich gekippt montiert werden, sodass dadurch der Grad der Parallelität zwischen dem steifem Bereich und der Ebene eingestellt werden kann, innerhalb der der Bügel bewegt werden kann.

Das System kann eine Batterie und ein Kabel umfassen. Das Kabel kann die Batterie mit dem Computer verbinden, um den Computer mit Strom zu versorgen. Die Batterie kann dann zum Beispiel in einer Jackentasche, in einer Hosentasche oder am Gürtel des Benutzers, insbesondere eines Lagerarbeiters, getragen werden. Dies reduziert das Gewicht, das am Kopf getragen werden muss. Der Tragekomfort wird so weiter verbessert. Die praktikable Tragedauer kann dadurch entsprechend verlängert werden.

Das Kabel der Batterie kann mit einer taschenförmigen Halterung verbunden sein. Die taschenförmige Halterung kann aus einem weichen, elastischen Kunststoffmaterial bestehen. In die taschenförmige Halterung kann das Ende des Bügels hineingeschoben werden, das dem Ende mit dem transparenten Prisma gegenüberliegt. Die taschenförmige Halterung 8 ist dann reibschlüssig mit dem Ende des Bügels verbunden. Innerhalb der taschenförmigen Halterung gibt es elektrische Steckverbindungen, die mit elektrischen Steckverbindungen am Ende des Bügels verbunden sind, wenn das Ende in die taschenförmige Halterung hineingeschoben worden ist.

Alternativ oder ergänzend kann in die taschenförmige Halterung eine Batterie integriert sein. Es muss also keine Batterie über ein Kabel so mit der taschenförmigen Halterung verbunden sein, dass die Batterie in einer Jackentasche, in einer Hosentasche oder am Gürtel des Benutzers getragen werden kann. Eine in der taschenförmigen Halterung untergebrachte Batterie kann so ausgewählt sein, dass dadurch Gewichte des Bügels verbessert ausbalanciert werden, um das Trageempfinden weiter zu verbessern.

Ist eine Batterie in die taschenförmige Halterung integriert, dann ist diese während des Tragens durch einen Benutzer bevorzugt bei der Oberseite der taschenförmigen Halterung angeordnet. Diese Anordnung hat sich als am wenigstens störend für einen Benutzer herausgestellt.

Alternativ oder ergänzend kann eine Batterie an der Kopfbedeckung angebracht sein, die über ein Kabel mit dem Bügel zwecks Stromversorgung verbunden werden kann. Das Kabel kann mit der taschenförmigen Halterung verbunden sein. Die Batterie kann an einer vorzugsweise aus Metall bestehenden Klammer befestigt sein, die an dem steifen Bereich der Kopfbedeckung befestigt ist oder befestigt werden soll. Aus Gründen einer ausbalancierten Gewichtsverteilung können solche Batterien seitlich gegenüberliegend mit der Kopfbedeckung verbunden sein oder verbunden werden. Zusätzlich zu einer vorzugsweise aus Metall bestehenden Klammer der Befestigungseinrichtung kann eine weitere Batterie an einer weiteren vorzugsweise aus Metall bestehenden Klammer befestigt sein, die nicht Teil der Befestigungseinrichtung ist, um eine zweite Batterie aus Gründen einer ausbalancierten Gewichtsverteilung an der Kopfbedeckung und zwar insbesondere an einem steifen Bereich lösbar befestigen zu können.

Die Kopfbedeckung kann ein oder mehrere Taschen umfassen, um ein oder mehrere Batterien in solche Taschen hineinstecken zu können. Solche Taschen können verschließbar sein, so zum Beispiel durch Reißverschluss, Knopf oder Druckknopf, um Batterien verliersicher an der Kopfbedeckung anbringen zu können..

Eine Batterie lösbar mit der Kopfbedeckung zu verbinden, ermöglicht das Waschen der Kopfbedeckung nach dem Entfernen der Batterien.

Der Bügel kann teilweise, insbesondere überwiegend, aus Kunststoff bestehen, sodass der Bügel vorteilhaft leicht sein kann. Je geringer das Gewicht ist, desto höher ist der Tragekomfort. Entsprechend lange kann das System bequem getragen werden.

Vorzugsweise ist bei einem Ende, bei dem sich das transparente Prisma befindet, auch eine mit dem Computer verbundene Kamera vorhanden. Durch die Kamera können Fotos und/oder Videos von der Umwelt aufgenommen werden, die sich im Blickfeld des Benutzers befindet.

Das System kann ein oder mehrere Sensoren umfassen, wie zum Beispiel einen GPS Sensor zur Positionsbestimmung und/oder ein Gyroskop zur Lagebestimmung und/oder ein Beschleunigungssensor zur Messung von Beschleunigungskräften und/oder einen Lichtsensor für eine Helligkeitsbestimmung. Die ein oder mehreren Sensoren können am Bügel befestigt sein. Die ein oder mehreren Sensoren können in den Computer integriert sein.

Die Erfindung betrifft auch eine Befestigungseinrichtung mit zwei Klammern für ein erfindungsgemäßes System. Die Befestigungseinrichtung umfasst zwei Klammern, die mit einer Schiene verbunden sind. Die eine Klammer ist nur um eine Achse verschwenkbar mit der Schiene verbunden. Die andere Klammer ist verschiebbar und um eine Achse verschwenkbar mit der Schiene verbunden. Die beiden Achsen verlaufen parallel zueinander. Darüber hinaus gibt es also keine anderen Bewegungsmöglichkeiten. Da das Befestigungssystem für das zuvor beschriebene System vorgesehen ist, ist es entsprechend klein und leicht.

Das System wird insbesondere von einem Lagerarbeiter verwendet, der Ware in einem Lager einlagert oder auslagert und Brillenträger ist. Dabei wird der Lagerarbeiter durch das System angeleitet. Das System unterstützt den Lagerarbeiter also bei der Durchführung seiner Arbeit. Das System gibt dem Lagerarbeiter insbesondere Hinweise, welche Tätigkeiten durchzuführen sind und/oder wie Tätigkeiten durchzuführen.

Bei Vorliegen eines erfindungsgemäßen transparenten Prismas haben sich die Anforderungen an die Winkelstabilität der Position des transparenten Prismas relativ zum Auge in allen Achsen als sehr hoch herausgestellt (<2 Grad). Durch die vorliegende Erfindung wird diese Anforderung erfüllt.

Zum Schutz der persönlichen Brille gegen Verkratzen des Brillenrahmens kann an der Befestigungseinrichtung eine Zunge angebracht sein, die zwischen der eigenen Brille und dem Bügel liegt. Die Zunge besteht vorzugsweise aus Kunststoff und ist sehr biegsam. Die Zunge ist vorzugsweise sehr dünn und damit vorteilhaft sehr leicht. Die Dicke der Zunge kann der Dicke eines Blatts Papier entsprechen. Die Zunge ist vorzugsweise transparent, um Abschattungen durch die Zunge zu vermeiden. Die Zunge ist insbesondere um ein Vielfaches dünner als die Dicke des Bügels.

Die Einstellung der Befestigungseinrichtung kann vorteilhaft an Brille und Kopf des Benutzers individuell angepasst werden.

Die Kopfbedeckung kann aus Hygienegründen getrennt von der Befestigungseinrichtung regelmäßig gewaschen werden, wenn die Befestigungseinrichtung lösbar mit der Kopfbedeckung verbunden ist.

Die Erfindung ermöglicht das Tragen der eigenen Brillen. Der technische Aufwand und die damit verbunden Kosten sind gering im Vergleich zu dem Fall, dass der tragbare Computer an einer speziell für den Anwendungsfall hergestellten zusätzlichen Brille angebracht wird. Außerdem wird das Tragen eines eigenen vertrauten Brillengestells als sehr angenehm empfunden, was die Tragbarkeit des Systems verbessert. Die Befestigungseinrichtung kann an der Kopfbedeckung zum Beispiel festgeschraubt sein. In diesem Fall kann die Befestigungseinrichtung mithilfe von Werkzeug gelöst werden, um die Kopfbedeckung problemlos waschen zu können. Vorzugsweise ist die Befestigungseinrichtung lösbar so mit der Kopfbedeckung verbunden, dass Werkzeug nicht eingesetzt werden muss. Die Befestigungseinrichtung kann aber unlösbar mit der Kopfbedeckung verbunden sein.

Das System kann auch für andere Anwendungsfälle vorgesehen sein wie z. B. Produktion, Qualitätssicherung oder Rezepturenmischung.

Nachfolgend wird die Erfindung anhand von Figuren näher erläutert.

Es zeigen
- Figur 1:: Bügel mit Stromversorgung und Befestigungseinrichtung;
- Figur 2:: System mit Kopfbedeckung und Bügel aus Figur 1;
- Figur 3:: Bauteile einer Befestigungseinrichtung;
- Figur 4:: von einer Klammer umklammerter steifer Bereich;
- Figur 5:: zusammengesetzte Bauteile aus Figur 3;
- Figur 6:: Konstruktion aus Figur 5 mit hinzugefügter Schiene;
- Figur 7:: Konstruktion aus Figur 6 mit hinzugefügter Lochscheibe;
- Figur 8:: Konstruktion aus Figur 7 mit hinzugefügtem Begrenzer;
- Figur 9:: Konstruktion aus Figur 8 mit hinzugefügter Kappe;
- Figur 10:: Konstruktion aus Figur 9 mit hinzugefügter Klammer;
- Figur 11:: schematische Aufsicht auf einen Bügel.

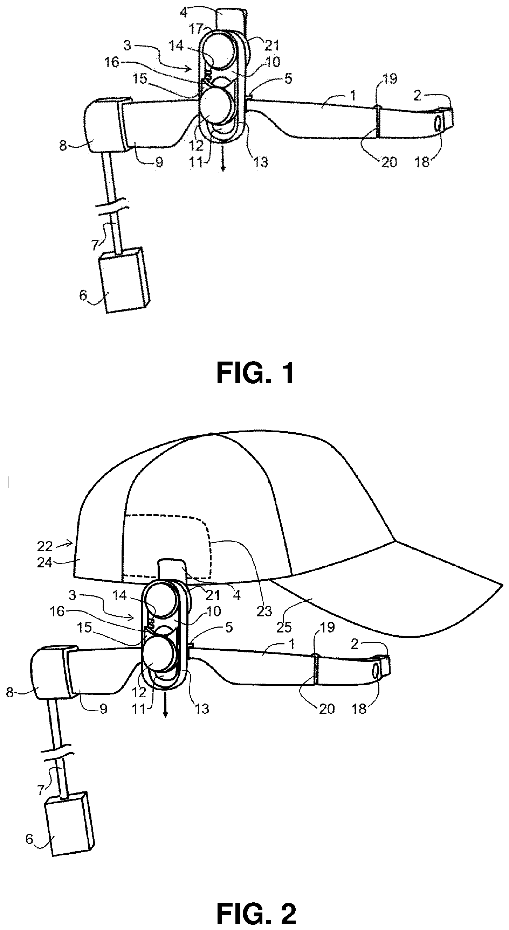

Die Figur 1 zeigt einen Bügel 1, der der Form eines Brillenbügels entspricht. Der Bügel 1 ist länglich und weist vorzugsweise eine halbrunde Ausnehmung 2 auf, die an den Ansatz eines menschlichen Ohrs angepasst ist. Die halbrunde Ausnehmung ist dafür bestimmt und geeignet, auf den Ansatz eines Ohres eines Menschen aufgesetzt zu werden. Der Bügel 1 ist im Vergleich zu einem üblichen Brillenbügel ansonsten grundsätzlich deutlich höher und auch etwas breiter, da in den Bügel 1 ein Mikrocomputer und ein Mikrodisplay integriert ist. Ein transparentes Prisma 2 ist an dem Bügel 1 angebracht und zwar bei einem Ende des Bügels 1. Durch das Mikrodisplay erzeugte Bilder können bei bestimmungsgemäßer Benutzung über das transparente Prisma 2 in das Blickfeld eines Benutzers projiziert werden. Während des Tragens können vom Computer bereitgestellte optische Informationen über das transparente Prisma 2 an den Benutzer übermittelt werden. Der Benutzer ist in der Regel ein Lagerarbeiter.

Eine Befestigungseinrichtung 3 umfasst eine Klammer 4. Die Klammer 4 dient der Befestigung an einer Kopfbedeckung. Die Klammer 4 besteht insbesondere aus elastisch biegsamem Metall. Die Klammer 4 kann den steifen Bereich der Kopfbedeckung umklammern, um den Bügel 1 an der Kopfbedeckung zu befestigen. Auf diese Weise können der Bügel 1 und damit der Computer lösbar mit der Kopfbedeckung verbunden sein.

Die Befestigungseinrichtung 3 umfasst eine weitere Klammer 5, die den Bügel 1 umgreift kann. Die weitere Klammer 5 besteht vorzugsweise aus einem elastisch biegsamen Kunststoff.

Die weitere Klammer 5 umgreift den Bügel 1 derart, dass der Bügel 1 während des Tragens vom Kopf eines Benutzers aus gesehen nach unten in Richtung Körper gezogen werden kann, um den Bügel 1 von der weiteren Klammer 5 zu lösen. Diese Richtung wird in der Figur 1 durch einen nach unten weisenden Pfeil angezeigt.

In der Figur 1 wird eine wiederaufladbare Batterie 6 gezeigt, die mit einem Kabel 7 mit einer taschenförmigen Halterung 8 verbunden ist. Die taschenförmige Halterung 8 besteht aus einem weichen, elastischen Kunststoffmaterial. In die taschenförmige Halterung 8 ist das links gezeigte Ende 9 des Bügels 1 hineingeschoben worden. Die taschenförmige Halterung 8 ist dann reibschlüssig mit dem Ende 9 des Bügels 1 verbunden. Innerhalb der taschenförmigen Halterung 8 gibt es elektrische Steckverbindungen, die mit elektrischen Steckverbindungen am Ende 9 des Bügels 1 verbunden sind, wenn das Ende 9 in die taschenförmige Halterung 8 hineingeschoben worden ist. Die Batterie 6 und damit die Stromversorgung kann dadurch beispielsweise in einer Jackentasche, in einer Hosentasche oder am Gürtel eines Benutzers untergebracht werden. Bleibt während einer solchen Benutzung beispielsweise das Kabel 7 an einem externen Gegenstand hängen, dann kann der Bügel 1 nach unten aus der Klammer 5 in Pfeilrichtung herausgezogen werden.

Die Befestigungseinrichtung 3 umfasst eine innerhalb der Befestigungseinrichtung 3 verschiebbar und schwenkbar gelagerte Schiene 10. Die Schiene 10 kann in Pfeilrichtung relativ zur weiteren Klammer 5 und damit relativ zum Bügel 1 nach unten verschoben werden und zurück. Der Bügel 1 kann daher erfindungsgemäß parallel oder zumindest im Wesentlichen parallel zum steifen Bereich einer Kopfbedeckung verschoben werden, wenn der Bügel 1 durch die Befestigungseinrichtung 3 an einem seitlichen steifen Bereich der Kopfbedeckung mithilfe der Klammer 4 befestigt ist. Auf diese Weise kann der Abstand zwischen der Kopfbedeckung und dem Bügel 1 verändert werden. Es ist so eine Höhenverstellbarkeit für den Bügel 1 relativ zur Kopfbedeckung möglich.

Die Schiene 10 weist ein Langloch 11 auf, durch welches die Schiene 10 relativ zur weiteren Klammer 5 verschiebbar gelagert wird. Die weitere Klammer 5 ist mit einer kreisrunden Scheibe verbunden. Der Durchmesser der kreisrunden Scheibe ist geringfügig kleiner als die Breite des Langlochs 11. Dadurch kann die Schiene 10 relativ zur weiteren Klammer 5 verschoben werden. Außerdem dient die kreisrunde Scheibe zur drehbaren Lagerung der Schiene 10 relativ zur Klammer 5. Die Klammer 5 kann daher relativ zur Schiene 10 auch verschwenkt werden.

Die kreisrunde Scheibe ist an einer kreisrunden Abdeckung 12 befestigt. Die kreisrunde Abdeckung12 befindet sich innerhalb einer langlochartigen Umrandung 13 der Schiene 10. Randseitig befindet sich ein Teil der Abdeckung 12 oberhalb von seitlichen Begrenzungen des Langlochs 11. Die Schiene 10 wird damit außen von der kreisrunden Abdeckung 12 verschiebbar und auch drehbar mit der weiteren Klammer 5 verbunden. Von der anderen Seite wird die Schiene 10 durch die weitere Klammer 5 gehalten. Damit kann die Schiene 10 nicht nur relativ zur Klammer 5 verschoben werden, sondern auch relativ zur Klammer 5 verschwenkt werden. Umklammert die weitere Klammer 5 den Bügel 1, kann damit der Bügel 1 relativ zur Schiene 10 verschwenkt und verschoben werden.

Ist die vorzugsweise aus Metall bestehende Klammer 4 an einem seitlichen, steifen Bereich einer Kopfbedeckung befestigt, so kann der Bügel 1 parallel zu diesem seitlichen, steifen Bereich der Kopfbedeckung verschoben und verschwenkt werden.

Als ein erstes Rastmittel kann die Schiene 10 eine Vielzahl von Mulden 14 aufweisen, die hintereinander entlang der Schiene 10 angeordnet sind. Als damit zusammenwirkendes Rastmittel kann es eine biegsam angeordnete Nase geben, die in eine jede Mulde 14 einrasten kann. Die biegsam angeordnete Nase kann unterhalb eines Begrenzers 15 angebracht sein. Der Begrenzer 15 wird zwischen der kreisrunden Scheibe und der kreisrunden Abdeckung 12 innerhalb der langlochartigen Umrandung 13 gehalten. Ein unplanmäßiges Verschieben der Schiene 10 kann so vermieden werden.

Das obere Ende der Schiene 10 ist mit der vorzugsweise aus Metall bestehenden Klammer 4 verschwenkbar verbunden. Die Klammer 4 ist mit einer Achse verbunden, die durch ein Loch der Schiene 10 hindurchführt. Die Achse ist auf der gegenüberliegenden Seite mit einer zweiten kreisrunden Abdeckung 17 verbunden. Die weitere kreisrunde Abdeckung 17 befindet sich ebenfalls innerhalb der langlochartigen Umrandung 13. Damit kann die Schiene 10 um die weitere Abdeckung 17 bzw. der Klammer 4 herum verschwenkt werden.

Insgesamt kann damit der Bügel in jede gewünschte Richtung innerhalb einer Ebene bewegt werden, die zumindest im Wesentlichen parallel zu einem steifen Bereich einer Kopfbedeckung verlaufen kann, an dem die insbesondere aus Metall bestehende Klammer 4 befestigt werden soll.

Die weitere Klammer 5 kann in Richtung Klammer 4 verschoben werden, bis zum Beispiel die halbkreisförmige Ausnehmung 16 des Begrenzers 15 auf die zweite kreisrunde Abdeckung 17 stößt. Der Begrenzer 15 begrenzt damit das Verschieben in Richtung Klammer 4. Alternativ oder ergänzend kann eine solche Begrenzung einer Schiebebewegung beispielsweise auch durch das eine obere Ende des Langloches 11 bewirkt werden. In entgegengesetzter Richtung kann das Verschieben beispielsweise durch Anstoßen der Abdeckung 12 an dem unteren Ende der langlochartigen Umrandung 13 begrenzt werden. Alternativ oder ergänzend kann das untere Ende des Langlochs 11 eine Verschiebebewegung der Schiene 10 begrenzen.

Beispielsweise der Begrenzer 15 kann auf seiner Oberseite Zähne aufweisen, die in Zähne eingreifen, die an der Unterseite der Abdeckung 12 vorhanden sind. Die Abdeckung 12 kann dann drehfest mit der weiteren Klammer 5 verbunden sein. Ist das entsprechende Material hinreichend elastisch ausgesucht, so kann dadurch eine Rastverbindung zwischen dem Begrenzer 15 und der Abdeckung 12 hergestellt werden. Diese Rastverbindung kann einem Verschwenken des Bügels 1 relativ zur Schiene 10 entgegenwirken, um ein unplanmäßiges Verschwenken um die Abdeckung 12 herum zu vermeiden. Alternativ oder ergänzend kann beispielsweise der Begrenzer 15 klemmend an der Abdeckung 12 anliegen, um unerwünschte Relativbewegungen zu vermeiden.

Eine solche Rastverbindung und/ oder Klemmverbindung kann beispielsweise auch zwischen der Abdeckung 17 und dem darunter angrenzenden Bereich der Schiene 10 realisiert sein. Die Abdeckung 17 ist dann drehfest mit der vorzugsweise aus Metall bestehenden Klammer 4 verbunden.

Benachbart zum transparenten Prisma 2 kann sich die Linse 18 einer Kamera befinden, die in den Bügel 1 integriert ist. Mithilfe der Kamera kann die Umgebung fotografiert oder gefilmt werden, die sich im Sichtfeld eines Benutzers befindet. Der Bügel 1 kann im vorderen Bereich ein Verbindungsmittel 19 aufweisen, das mit einem weiteren Gestell so verbunden werden kann, dass der Computer dann wie eine Brille getragen werden kann. Im vorderen Bereich kann der Bügel 1 ein Scharnier 20 aufweisen, um das transparente Prisma 2 ggfs. nebst Linse 18 in eine geschützte Stellung zur Aufbewahrung klappen zu können. Alternativ oder ergänzend kann durch das Scharnier 20 das transparente Prisma 2 weggeklappt werden, um so das Sichtfeld während einer Benutzung verbessert freizugeben. Ein Wegklappen bewirkt vorteilhaft ein Ausschalten des Computers. Ein Zurückklappen bewirkt vorteilhaft ein Einschalten des Computers. Das Scharnier 20 ist dann Teil eines Ein- und/oder Ausschalters.

Es kann ein austauschbarer Abstandshalter 21 zum Beispiel zwischen der Schiene 10 und der Klammer 4 vorhanden sein. Durch Auswahl der Dicke des Abstandhalters 21 kann ein Abstand zur Kopfbedeckung eingestellt werden.

In der Figur 2 wird eine Kappe 22 und folglich eine Kopfbedeckung gezeigt, die seitlich einen steifen flächigen Bereich 23 aus Kunststoff umfasst. Darüber hinaus besteht die Kappe 22 aus einem Gewebe 24. Das Gewebe 24 kann beim steifen Bereich 23 zweilagig sein. Der steife flächige Bereich 23 befindet sich dann zwischen den beiden Gewebelagen und wird so gehalten. Die aus Metall bestehende Klammer 4 umklammert den steifen Bereich 23. Alternativ oder ergänzend kann der steife Bereich aber auch an dem Gewebe 24 festgenäht und/oder festgeklebt sein.

Die Kappe 22 kann einen Schirm 25 aufweisen. Dieser Schirm 25 ist aber nicht erforderlich, um den Bügel 1 hinreichend stabil am Kopf tragen zu können.

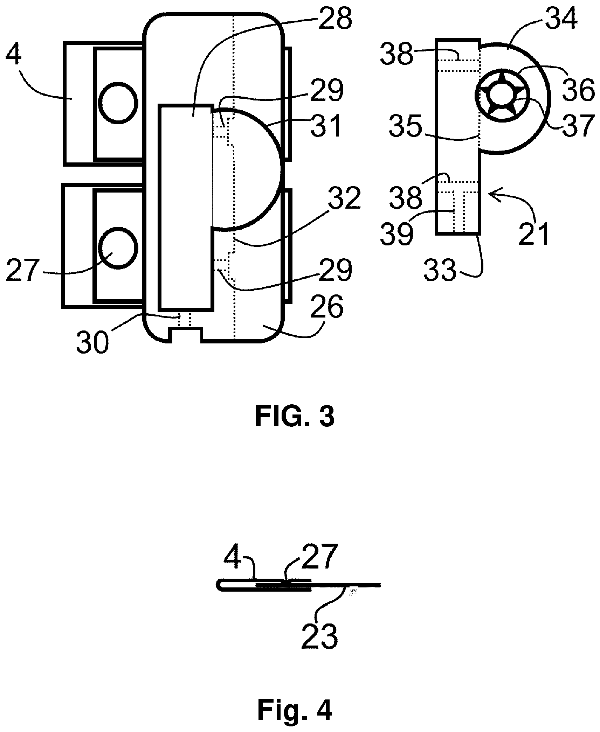

Die Figur 3 zeigt eine Aufsicht eines Bauteils der Befestigungseinrichtung mit einem aus Kunststoff bestehenden, vorzugsweise langgestreckten Körper 26, an dessen Rückseite zwei nebeneinander angeordnete Klammern 4 befestigt sein können. Der Körper 26 kann einstückig aus Kunststoff gefertigt sein, so zum Beispiel durch Spritzguss. Die beiden Klammern 4 können beispielsweise durch Nieten mit dem vorzugsweise aus Kunststoff bestehenden Körper 26 verbunden sein. Beide Klammern 4 bestehen vorzugsweise aus Metall. Durch das Vorsehen von wenigstens zwei Klammern 4 kann die Befestigungseinrichtung besonders stabil und rutschfest an dem steifen Bereich 23 einer Kopfbedeckung 22 befestigt werden. Eine jede Klammer 4 kann eine vorstehende Wölbung 27 aufweisen, die wie in Figur 4 im Schnitt gezeigt am steifen Bereich 23 anliegt, wenn die beiden Klammern 4 den steifen Bereich 23 umklammern. Die beiden Wölbungen 4 stehen dann in Richtung des steifen Bereichs 23 vor. Es entsteht so punktuell ein hoher Druck, der durch die vorstehenden Wölbungen 27 auf den steifen Bereich 23 ausgeübt wird. Dadurch wird eine besonders haltbare Verbindung zwischen den Klammern 4 und dem steifen Bereich 23 einer Kopfbedeckung 22 erzielt.

Der aus Kunststoff bestehende Körper 26 kann eine quaderförmige Ausnehmung 28 aufweisen. Beispielsweise zwei Bohrungen 29 führen beispielsweise an der rechts gezeigten seitlichen Längsseite in die Ausnehmung 28 hinein. An der in der Figur 3 unten gezeigten Stirnseite kann seitlich wenigstens eine weitere Bohrung 30 in die quaderförmige Ausnehmung 28 hineinführen.

An die rechte obere Seite der quaderförmigen Ausnehmung grenzt vorzugsweise eine zum Beispiel teilkreisförmige Ausnehmung 31 an. Die quaderförmige Ausnehmung 28 kann tiefer als die daran angrenzende teilkreisförmige Ausnehmung 31 sein. Dadurch ist es möglich, unterhalb der teilkreisförmigen Ausnehmung 31 eine Aussparung 32 vorzusehen, sodass die Bohrungen 29 zugänglich sind. Die beiden Ausnehmungen 28 und 31 sind nicht durch eine Wand getrennt, gehen also ineinander über und bilden so eine gemeinsame Aufnahme, in die beispielsweise ein Abstandshalter eingesetzt werden kann.

Angepasst an die Form der beiden Ausnehmungen 28, 31 kann es einen Abstandshalter 21 geben, der in der Figur 3 in einer Aufsicht gezeigt wird. Der Abstandshalter 21 kann vorzugsweise mit Spiel in die gemeinsame Aufnahme 28, 31 eingesetzt werden. Der Abstandshalter 21 weist also ebenfalls einen lang gestreckten quaderförmigen Körper 33 auf und daran angrenzend einen teilkreisförmigen Körper 34. Der quaderförmige Körper 33 kann tiefer als der daran angrenzende teilkreisförmige Körper 34 sein. Von der Rückseite aus gesehen bilden der teilkreisförmige Bereich 34 und der quaderförmige Bereich dann eine Stufe 35.

Auf dem teilkreisförmigen Körper 34 kann sich eine kreisrunde Scheibe 36 befinden. Auf der Scheibe 36 kann sich eine nach oben vorstehende Achse 37 mit einem beispielsweise sternförmigen Außenumfang befinden. Der Außenumfang soll für eine drehfeste Verbindung sorgen können. Dieser ist daher vorzugsweise zumindest nicht kreisrund.

Korrespondierend zu den Bohrungen 29 und 30 beim aus Kunststoff bestehenden Körper 26 umfasst der Abstandshalter 21 Bohrungen 38 und 39. Die Bohrung 39 führt seitlich in die unten gezeigte schmale Stirnseite hinein. Die Bohrungen 38 führen seitlich durch die Längsseiten hindurch. Es können auch mehr als zwei solcher Bohrungen vorhanden sein.

Der in der Figur 3 gezeigte Abstandshalter 21 kann einstückig aus Kunststoff gefertigt sein, so zum Beispiel durch Spritzguss.

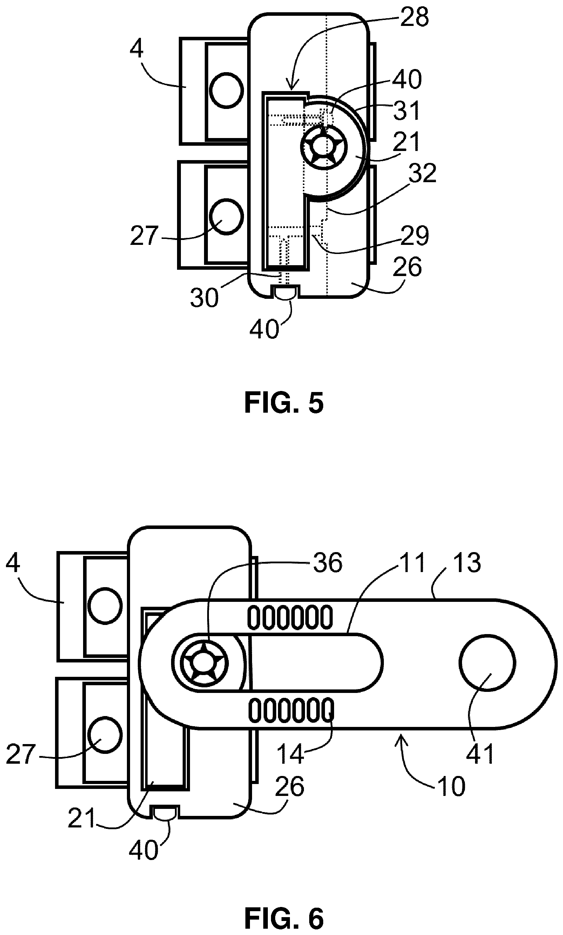

In der Figur 5 wird gezeigt, wie der Abstandshalter 21 aus Figur 3 in die Ausnehmungen 28, 31 des aus Kunststoff bestehenden Körpers 26 eingesetzt ist. Mit einer Schraube 40 kann der lang gestreckte quaderförmige Körper 33 des Abstandshalters 21 durch eine der zwei Bohrungen 29 hindurch bei seinem in der Figur 5 oben liegenden Ende festgeschraubt worden sein. Weil der Körper 32 lang gestreckt ist, kann seine Lage relativ zu dem aus Kunststoff bestehenden Körper 26 sehr genau justiert werden, wenn ein Spiel dies erlaubt. Dies kann durch Auswahl der zweiten Schraube 40 geschehen, die im Fall der Figur 5 an der schmalen Stirnseite durch die Bohrung 30 hindurch festgeschraubt worden ist.

Wäre diese zweite Schraube 40 nicht in die Bohrung 30 hineingeschraubt, sondern stattdessen in die andere Bohrung 29, so wäre dadurch eine leicht anders gekippte Position des Abstandshalters 21 innerhalb der Ausnehmung 28 erzielt worden. Es kann also so zwischen zwei unterschiedlich gekippten Positionen ausgewählt werden, um eine Feinjustierung vorzunehmen. Im Abstandshalter müssen nicht zwingend solche vorgefertigten Bohrungen vorhanden sein, da Schrauben auch unmittelbar in Kunststoffmaterial hineingeschraubt werden können.

Es können unterschiedlich dicke Abstandshalter 21 vorgesehen sein, um durch Auswahl eines der Abstandshalter 21 den Abstand eines von der Befestigungseinrichtung gehaltenen Bügels 1 von den aus Metall bestehenden Klammern 4 einstellen zu können.

Nach dem Einsetzen des Abstandshalters 21 kann die Schiene 10 angebracht werden, wie dies in der Figur 6 gezeigt wird. Das Langloch 11 der Schiene 10 befindet sich insbesondere auf gleicher Höhe wie die kreisrunde Scheibe 36. Das Langloch 11 wird also durch die kreisrunde Scheibe 36 drehbar und verschiebbar gehalten. An dem Ende der Schiene 10, welches dem Langloch 11 gegenüberliegt, gibt es grundsätzlich ein kreisrundes Loch 41 in der Schiene 10. Der Durchmesser des kreisrunden Lochs 41 kann der Breite des Langlochs 11 entsprechen. Es kann aber auch größer oder kleiner sein.

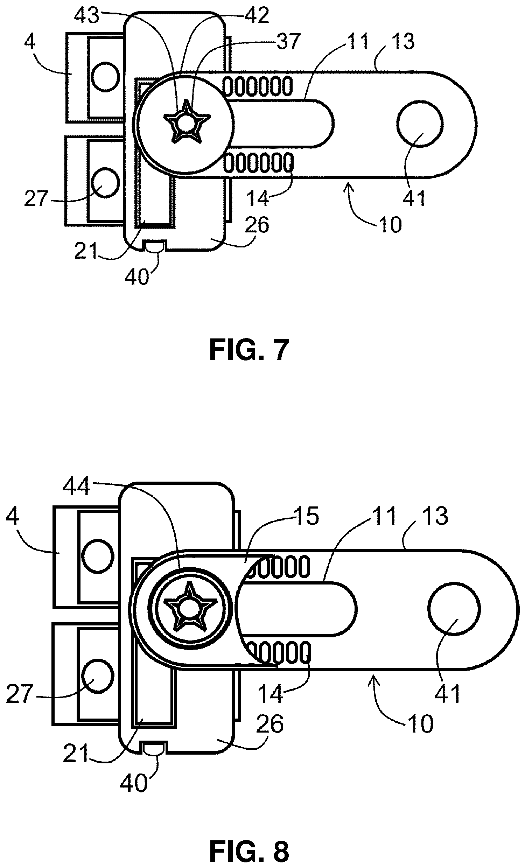

Wie in der Figur 7 gezeigt, kann es im Anschluss daran vorteilhaft sein, zunächst eine aus Kunststoff bestehende, gelochte Scheibe 42 so anzubringen, dass die nach oben abstehende Achse 37 durch das Loch 43 der Scheibe 42 hindurchführt. Das Loch 43 der Scheibe 42 kann an die sternförmige Außenseite der Achse 37 angepasst sein und wird dann drehfest gehalten. Ist die Außenseite der Achse 37 auf andere Weise nicht rotationssymmetrisch gestaltet, so kann das Loch 43 der Scheibe 42 entsprechend anders an die andere Form angepasst sein. Die Scheibe 42 befindet sich vorzugsweise innerhalb der langlochartigen Umrandung der Schiene 10 und liegt seitlich neben dem Langloch 11 auf der Schiene 10 auf.

Im Anschluss daran kann wie in der Figur 8 gezeigt ein Begrenzer 15 eingefügt sein. Der Begrenzer 15 verfügt beispielsweise über eine umlaufende Nut, in die ein aus Gummi bestehender O-Ring 44 eingesetzt ist. Der O-Ring 44 steht nach oben gegenüber der umlaufenden Nut hervor. Anstelle eines O-Rings kann es auch ein anderes aus Gummi bestehendes Teil geben, das durch eine Ausnehmung gehalten wird und gegenüber der Ausnehmung vorsteht. Anstelle von Gummi kann auch ein Material mit ähnlich elastischen Eigenschaften ausgewählt sein.

Auf der Unterseite kann beim Begrenzer 15 ein Paar elastisch vorstehender Nasen vorhanden sein, die in jeweils eine Mulde 14 eingreifen können, um so eine Rastverbindung bereitzustellen.

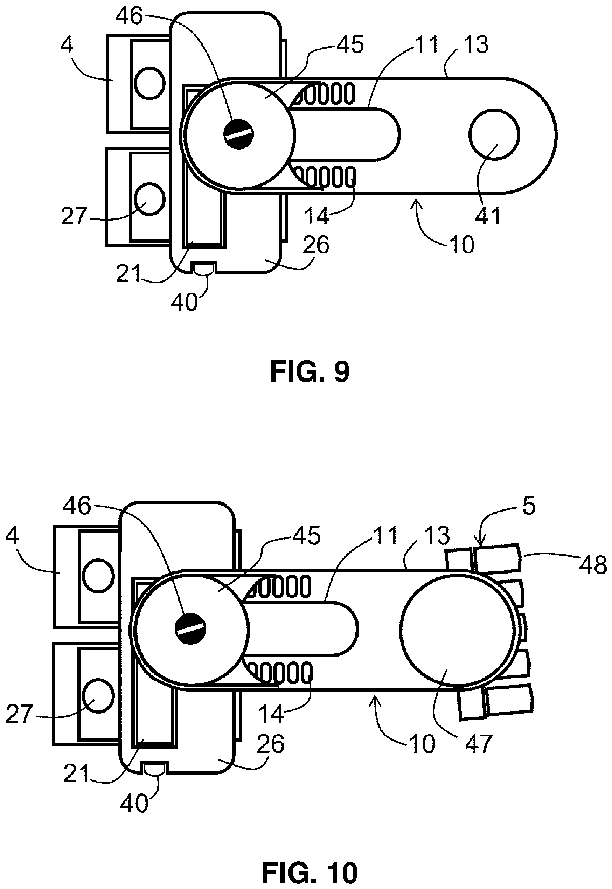

Wie in der Figur 9 gezeigt, kann schließlich eine zum Beispiel kreisrunde, zum Beispiel aus Kunststoff bestehende Kappe 45 aufgesetzt und beispielsweise mit einer mittig angeordneten, zum Beispiel aus Metall bestehenden Schraube 46 befestigt werden. Die Schraube 46 kann in die darunter liegende Achse 37 hineingeschraubt sein. Dadurch wird der O - Ring 44 oder ein alternativ eingesetztes aus Gummi bestehendes Teil verformt. Es wird so eine Klemmwirkung erzielt. Das hat zur Folge, dass die Schiene 10 klemmend gehalten und so gegen ein unbeabsichtigtes Verschwenken gesichert wird.

Eine in der Figur 10 zu sehende, zum Beispiel aus Kunststoff bestehende Kappe 47 kann eine mittig abstehende Achse umfassen. Der Durchmesser der Achse entspricht dem Durchmesser des kreisrunden Lochs 41. Um die Achse führt beispielsweise eine Nut herum, in die ein aus Gummi bestehender O-Ring eingesetzt ist. Der O-Ring steht etwas hervor. Die Achse wird durch das Loch 41 gesteckt. An der gegenüberliegenden Seite wird eine Klammer 5 mit der Achse zum Beispiel verschraubt, sodass der O-Ring an die Schiene 10 gepresst wird. Die Klammer 5 wird dadurch klemmend gehalten, kann aber relativ zur Schiene 10 verschwenkt werden. Anstelle eines O - Rings kann auch ein anders geformter Körper aus Gummi oder einem damit vergleichbaren Material eingesetzt sein.

Um den Bügel 1 gut halten zu können, ist die Klammer die Klammer 5 erfindungsgemäß langgestreckt und umfasst eine Mehrzahl von elastisch biegsamen Zähnen 48, die sich paarweise gegenüberstehen. Zwei sich gegenüberstehende Zähne umklammern einen Bügel. Insgesamt fünf Paaren an Zähnen 48 werden als Beispiel in der Figur 10 gezeigt. Es können auch mehr als fünf oder weniger als fünf solcher Paare an Zähnen 48 vorhanden sein. Bewährt haben sich 3 bis 10 Paare.

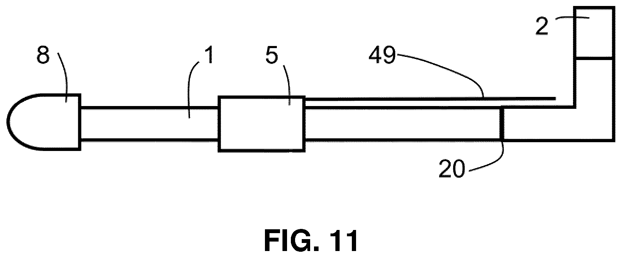

In der Figur 11 wird schematisch eine Aufsicht auf den Bügel 1 gezeigt. Zum Schutz der persönlichen Brille gegen Verkratzen des Brillenrahmens wird eine Zunge 49 von der Klammer 5 gehalten. Dadurch kann die Zunge 49 bei Beschädigung leicht ausgetauscht werden. Die Zunge kann zwischen der eigenen Brille eines Benutzers und dem Bügel 1 liegen. Die Zunge 49 kann aber auch zum Beispiel unmittelbar mit dem Bügel 1 verbunden sein. Die Zunge kann auch entfernt werden, falls keine persönliche Brille getragen wird.

## Patentansprüche

1. System mit einer Kopfbedeckung (22), die seitlich einen steifen Bereich (23) umfasst, mit einem Bügel (1), mit einem Computer, der an dem Bügel (1) angebracht ist, mit einem Mikrodisplay, das an dem Bügel (1) angebracht ist, mit einem transparenten Prisma (2), das an dem Bügel (1) angebracht ist, wobei das Mikrodisplay und das transparente Prisma (2) so angeordnet sind, dass durch das Mikrodisplay erzeugte Bilder durch das transparente Prisma (2) projiziert werden können, mit einer Befestigungseinrichtung (3), die den Bügel (1) an dem steifen Bereich (23) der Kopfbedeckung (22) beweglich befestigt oder beweglich befestigen kann, wobei die Befestigungseinrichtung (3) so ist, dass der Bügel (1) innerhalb einer Ebene bewegt werden kann, die zumindest im Wesentlichen parallel zum genannten steifen Bereich (23) der Kopfbedeckung (22) verläuft, wenn die Befestigungseinrichtung (3) an dem steifen Bereich (23) befestigt ist,
**dadurch gekennzeichnet, dass**
die Befestigungseinrichtung (3) zumindest eine Klammer (5) umfasst, die an dem Bügel (1) befestigt ist oder werden kann, und die zumindest eine Klammer (5) den Bügel (1) so umklammert, dass der Bügel (1) beim bestimmungsgemäßen Tragen der Kopfbedeckung (22) nach unten aus der Klammer (5) herausgezogen werden kann, wobei die Klammer (5) langgestreckt ist und eine Mehrzahl von elastisch biegsamen Zähnen (48) umfasst, die sich paarweise gegenüberstehen, um den Bügel (1) zu umklammern.

2. System nach Anspruch 1, **dadurch gekennzeichnet, dass** der seitlich steife Bereich aus Kunststoff besteht.

3. System nach einem der vorhergehenden Ansprüche, **dadurch gekennzeichnet, dass** die Kopfbedeckung (22) mit Ausnahme von ein oder mehreren versteiften Bereichen aus flexiblem Material besteht.

4. System nach dem vorhergehenden Anspruch, **dadurch gekennzeichnet, dass** das flexible Material ein Textil ist.

5. System nach dem vorhergehenden Anspruch, **dadurch gekennzeichnet, dass** das Textil ein Gewebe oder ein Netz ist.

6. System nach einem der vorhergehenden Ansprüche, **dadurch gekennzeichnet, dass** die Befestigungseinrichtung (3) zumindest eine Klammer (4) umfasst, die an dem seitlichen steifen Bereich (23) befestigt ist oder werden kann.

7. System nach einem der vorhergehenden Ansprüche, **dadurch gekennzeichnet, dass** die Befestigungseinrichtung (3) eine Schiene (10) umfasst, die parallel zum seitlich versteiften Bereich verschiebbar und/oder schwenkbar gelagert ist, wenn der Bügel (1) an dem seitlichen steifen Bereich (23) befestigt ist.

8. System nach einem der vorhergehenden Ansprüche, **dadurch gekennzeichnet, dass** die Kopfbedeckung (22) zwei sich gegenüberliegende steife Bereiche umfasst.

9. System nach dem vorhergehenden Anspruch, **dadurch gekennzeichnet, dass** die Befestigungseinrichtung (3) Rastmittel (14) umfasst, mit der das Verschwenken der Schiene (10) und/oder das Verschieben der Schiene (10) verrastet werden kann.

10. System nach einem der vorhergehenden Ansprüche, **dadurch gekennzeichnet, dass** die Befestigungseinrichtung (3) einen austauschbaren Abstandshalter umfasst, durch den ein Abstand zwischen Kopfbedeckung (22) und Bügel (1) eingestellt werden kann.

11. System nach einem der vorhergehenden Ansprüche, **dadurch gekennzeichnet, dass** mit dem Bügel (1) eine Kamera (18) und/oder zumindest ein Sensor verbunden ist.

12. System nach einem der vorhergehenden Ansprüche, **dadurch gekennzeichnet, dass** das System ein weiteres Gestell umfasst, das mit dem Bügel (1) so verbunden werden kann, dass der Computer dann wie eine Brille getragen werden kann.

13. Verwendung eines Systems nach einem der vorhergehenden Ansprüche auf dem Gebiet der Lagerlogistik durch einen Lagerarbeiter, der eine Brille trägt, wobei die Position des transparenten Prismas (2) so eingestellt wird, dass sich ein Glas der Brille zwischen dem transparenten Prisma (2) und einem Auge des Lagerarbeiters befindet.

## Claims

1. System comprising a headgear (22) having a rigid region (23) on the side, a frame (1), a computer attached to the frame (1), a microdisplay attached to the frame (1), a transparent prism (2) which is attached to the frame (1), wherein the microdisplay and the transparent prism (2) are arranged such that images generated by the microdisplay can be projected through the transparent prism (2), with a fastening device (3), which can movably attach or does movably attach the frame (1) to the rigid portion (23) of the headgear (22), wherein the fastening device (3) is such that the frame (1) can be moved within a plane that is at least substantially parallel to said rigid portion (23) of the headgear (22) when the fastening device (3) is fastened to the rigid area (23),
**characterized in that**
the fastening device (3) comprises at least one clamp (5) which is or can be fastened to the frame (1), and that the at least one clamp (5) clamps the frame (1) in such a way that the frame (1) can be pulled down out of the clamp (5) when the headgear (22) is worn as intended, wherein the clamp (5) is elongated and comprises a plurality of elastically flexible teeth (48) that face each other in pairs in order to clamp the frame (1).

2. System according to claim 1, **characterized in that** the laterally rigid area is made of plastic.

3. System according to one of the preceding claims, **characterized in that** the headgear (22) is made of flexible material with the exception of one or more stiffened areas.

4. System according to the preceding claim, **characterized in that** the flexible material is a textile.

5. System according to the preceding claim, **characterized in that** the textile is a fabric or a net.

6. System according to one of the preceding claims, **characterized in that** the fastening device (3) comprises at least one clamp (4) which is or can be fastened to the laterally rigid area (23).

7. System according to one of the preceding claims, **characterized in that** the fastening device (3) comprises a rail (10) which is mounted so as to be displaceable and/or pivotable parallel to the laterally stiffened region when the frame (1) is fastened to the lateral rigid region (23).

8. System according to one of the preceding claims, **characterized in that** the headgear (22) comprises two opposing rigid areas.

9. System according to the preceding claim, **characterized in that** the fastening device (3) comprises locking means (14) with which the pivoting of the rail (10) and/or the sliding of the rail (10) can be locked.

10. System according to one of the preceding claims, **characterized in that** the fastening device (3) comprises a replaceable spacer by means of which a distance between the headgear (22) and the frame (1) can be adjusted.

11. System according to one of the preceding claims, **characterized in that** a camera (18) and/or at least one sensor is connected to the frame (1).

12. System according to one of the preceding claims, **characterized in that** the system comprises a further frame which can be connected to the frame (1) in such a way that the computer can then be worn like a pair of glasses.

13. Use of a system according to one of the preceding claims in the field of warehouse logistics by a warehouse worker wearing glasses, wherein the position of the transparent prism (2) is adjusted so that a lens of the glasses is located between the transparent prism (2) and an eye of the warehouse worker.

## Revendications

1. Système avec un couvre-chef (22) qui comprend latéralement une région rigide (23), avec une branche (1), avec un ordinateur qui est monté sur la branche (1), avec un micro-écran qui est monté sur la branche (1), avec un prisme transparent (2) qui est monté sur la branche (1), dans lequel le micro-écran et le prisme transparent (2) sont disposés de sorte que des images générées par le micro-écran peuvent être projetées à travers le prisme transparent (2), avec un dispositif de fixation (3) qui fixe de manière mobile ou peut fixer de manière mobile la branche (1) à la région rigide (23) du couvre-chef (22), dans lequel le dispositif de fixation (3) est tel que la branche (1) peut être déplacée au sein d'un plan qui s'étend au moins essentiellement parallèlement à ladite région rigide (23) du couvre-chef (22) lorsque le dispositif de fixation (3) est fixé à la région rigide (23),
**caractérisé en ce que**
le dispositif de fixation (3) comprend au moins une pince (5) qui est ou peut être fixée à la branche (1), et l'au moins une pince (5) encercle la branche (1) de sorte que la branche (1) peut être extraite de la pince (5) vers le bas lors du port conforme du couvre-chef (22), dans lequel la pince (5) est étirée en longueur et comprend une pluralité de dents flexibles élastiquement (48) qui s'opposent par paire pour encercler la branche (1).

2. Système selon la revendication 1, **caractérisé en ce que** la région rigide latéralement se compose de plastique.

3. Système selon une des revendications précédentes, **caractérisé en ce que** le couvre-chef (22) se compose de matière flexible à l'exception d'une ou plusieurs régions rigidifiées.

4. Système selon la revendication précédente, **caractérisé en ce que** la matière flexible est un textile.

5. Système selon la revendication précédente, **caractérisé en ce que** le textile est un tissu ou un filet.

6. Système selon une des revendications précédentes, **caractérisé en ce que** le dispositif de fixation (3) comprend au moins une pince (4) qui est ou peut être fixée à la région rigide latéralement (23).

7. Système selon une des revendications précédentes, **caractérisé en ce que** le dispositif de fixation (3) comprend un rail (10) qui est logé de manière à pouvoir être coulissé et/ou pivoté parallèlement à la région rigide latéralement lorsque la branche (1) est fixée à la région rigide latéralement (23).

8. Système selon une des revendications précédentes, **caractérisé en ce que** le couvre-chef (22) comprend deux régions rigides opposées.

9. Système selon la revendication précédente, **caractérisé en ce que** le dispositif de fixation (3) comprend des moyens d'encliquetage (14) avec lesquels le pivotement du rail (10) et/ou le coulissement du rail (10) peut être encliqueté.

10. Système selon une des revendications précédentes, **caractérisé en ce que** le dispositif de fixation (3) comprend un écarteur permutable par lequel un écart entre couvre-chef (22) et branche (1) peut être réglé.

11. Système selon une des revendications précédentes, **caractérisé en ce qu'**une caméra (18) et/ou au moins un capteur est connecté(e) à la branche (1).

12. Système selon une des revendications précédentes, **caractérisé en ce que** le système comprend un autre bâti qui peut être connecté à la branche (1) de sorte que l'ordinateur peut alors être porté comme des lunettes.

13. Utilisation d'un système selon une des revendications précédentes dans le domaine de la logistique d'entrepôt par un ouvrier d'entrepôt qui porte des lunettes, dans laquelle la position du prisme transparent (2) est réglée de sorte qu'un verre des lunettes se trouve entre le prisme transparent (2) et un œil de l'ouvrier d'entrepôt.
